Europäisches Patentamt

European Patent Office

Office européen des brevets

(19)

(11) Publication number: **0 120 211**
A2

(12) **EUROPEAN PATENT APPLICATION**

(21) Application number: **84100755.2**

(22) Date of filing: **21.01.84**

(51) Int. Cl.³: **G 01 B 11/02**

(30) Priority: **02.03.83 IT 1986083**

(43) Date of publication of application:
**03.10.84 Bulletin 84/40**

(84) Designated Contracting States:
**CH DE FR GB LI SE**

(71) Applicant: **CARBOLOY S.p.A.**
**Via Fabio Filzi 11**
**I-20021 Baranzate di Bollate (MI)(IT)**

(72) Inventor: **Lozar, Boris**
**Via Ronchi 39**
**I-20134 Milan(IT)**

(74) Representative: **Michelotti, Giuliano**
**c/o CGE Via Bergognone, 27**
**I - 20144 Milano(IT)**

(54) Method and apparatus for the dimension inspection of solid bodies.

(57) For the dimension and irregularity inspection of the edges of solid bodies delimited by at least two plane and parallel surface, the body itself is struck by a blade laser beam which is slanted with respect to the side of the body and is formed by parallel rays on a perpendicular plane to the surface planes of the body. The beam which is reflected back from the side of the body is received by a TV camera through a reflecting mirror, so that the TV camera receives the dimensions of the lateral height while a second TV camera, aligned with the axis of the body, receives the diffracted rays from the upper edge thereby enabling a control of the dimensions and any irregularies present.

Fig.3

- 1 -

Method and apparatus for the dimension inspection of solid bodies

This invention concerns the inspection of the dimensions of solid bodies, and in particular, the method and the apparatus for the inspection of the dimensions of solid bodies delimited by two plane and parallel surfaces.

The following specification contains explicit reference to hard metal inserts for mechanical applications, but it must be noted that these applications are not limited to the areas described herein, but may be applied in other cases and in other technological areas where similar problems arise.

It is known that hard metal inserts are used in various mechanical processing such as turning, milling, planing. etc.

Particular problems which arise in the manufacturing of hard metal inserts include: the dimensional inspection of their shape, the detection of defects on the edges, and their quality grading after these inspections have been effected.

Until now, the main problem has been that of detecting defective edges.

To this regards, a system of lighting for high resolution electro-

0120211

optic vision able to distinguish relatively small details, and in particular any defects on the hard metal insert cutting edges, has been described, illustrated and claimed in the EPC patent application no. 83106422.5, filed on July 1st, 1983.

With this system, a blade beam is generated by a laser to strike the edges or the cutting edges of the insert. The beam is generated by an optic group with a cylindrical lens, and is transmitted by means of a rotating head to skim and impinge on the cutting edges of the insert. In this way, any defects or irregularities, such as chippings, on the cutting edges will cause a diffraction of the blade beam which will be instantly located or more precisely detected by an electro-optic detector such as a TV camera with a VIDICON tube.

As already mentioned however, a complete inspection of a solid body such as a hard metal insert, cannot be limited to the detection of defects or chippings on the cutting edges, but must contain a more general dimensional inspection such as the inspection of the parallelism of the two major surfaces which make up the body.

The main object of this invention is to provide a method and an apparatus which will carry out a dimensional inspection of solid bodies, especially those solid bodies with two plane and parallel surfaces, whose profile may be determined mathematically.

The specific object of this invention is to provide a method and an apparatus which, in the field of dimension inspection, allows the detection of imperfections on the edges of a solid body and the automatic grading based on the dimension inspection results and the irregularities located.

This invention therefore provides for a dimensional checking of solid bodies, delimited by two plane and parallel surfaces, of the kind in which the body is struck by a laser generated blade beam sliding along at least one edge of the body to be checked, being a beam, coming by reflection from said blade beam, sent onto an electro-optic detector group, characterized in that said blade beam, lying on a plane perpendicular to the edges of the body to be checked, is sent with a preestablished slant against the side of said body to strike it at its full height, being said beam moved along the whole perifery of the same body in order to check the whole perimetral side.

According to a preferred embodiment of the present invention, this method uses two opposite blade means, each effecting an inspection of one half of the body.

The apparatus used in this invention includes a support for the body to be inspected, laser means generating a scanning beam, collimator means giving the beam a blade shape, and electro-optic means to receive and process the reflected beam resulting from the impact of the blade beam against the body, characterized in that said laser means are set out in a preestablished slant with respect to the side of the body to be checked, and motor means are provided to generate a relative motion between the body and the blade beam at a controlled speed.

The specific features and the advantages of this invention will be made clear in the following detailed description, taken in connection with the enclosed drawing in which:

Figure 1 is a schematic illustration of the principle of the invention.

Figure 2 is a schematic view in lateral elevation of the apparatus' essential components.

Figure 3 is a schematic illustration similar to Figure 2 in a preferred embodiment form.

Figure 4 is a schematic illustration of a further significant characteristic of the invention.

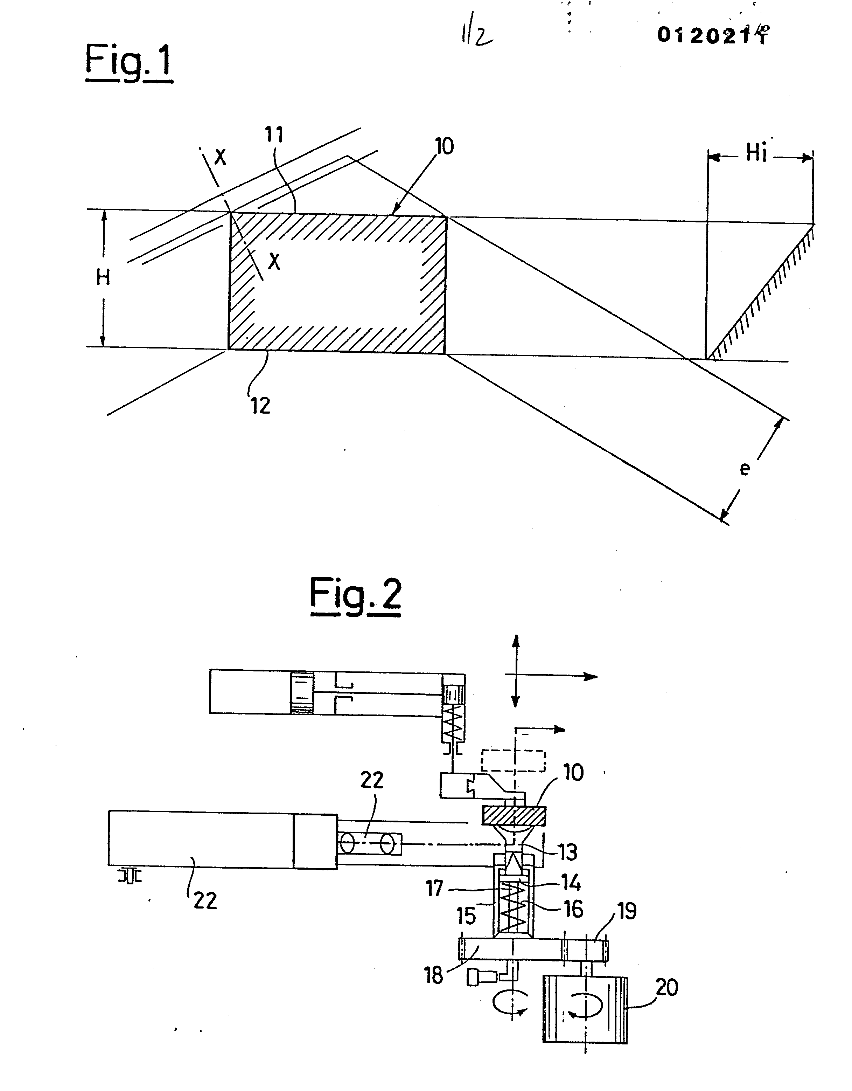

With particular reference to Figure 1, a metallic insert, delimited by surfaces 11 and 12, and having a height of H, is referenced by the numeral 10.

As can be clearly seen in Figure 2, the insert 10 is placed on a suction cup 13 mounted to a sliding piston 14 in a cylinder 15. Piston 14 is stressed to maximum extension by a compression spring 16 mounted co-axially around stem 17 of piston 14.

The lower part of cylinder 15 is connected to a first gear-wheel 18, inmeshed with a second gear-wheel 19, controlled by a step by step motor shaft 20, for which insert 10 is made to rotate in front of the laser beam source 21, to which is connected a collimator 22, which makes the beam as similar as possible to a blade with a constant and minimal thickness.

As the structure of the laser beam source 21, the collimator 22, and the rotating support for insert 10 is described in the above-mentioned EPC patent application, it will not be necessary to further deep this subject matter.

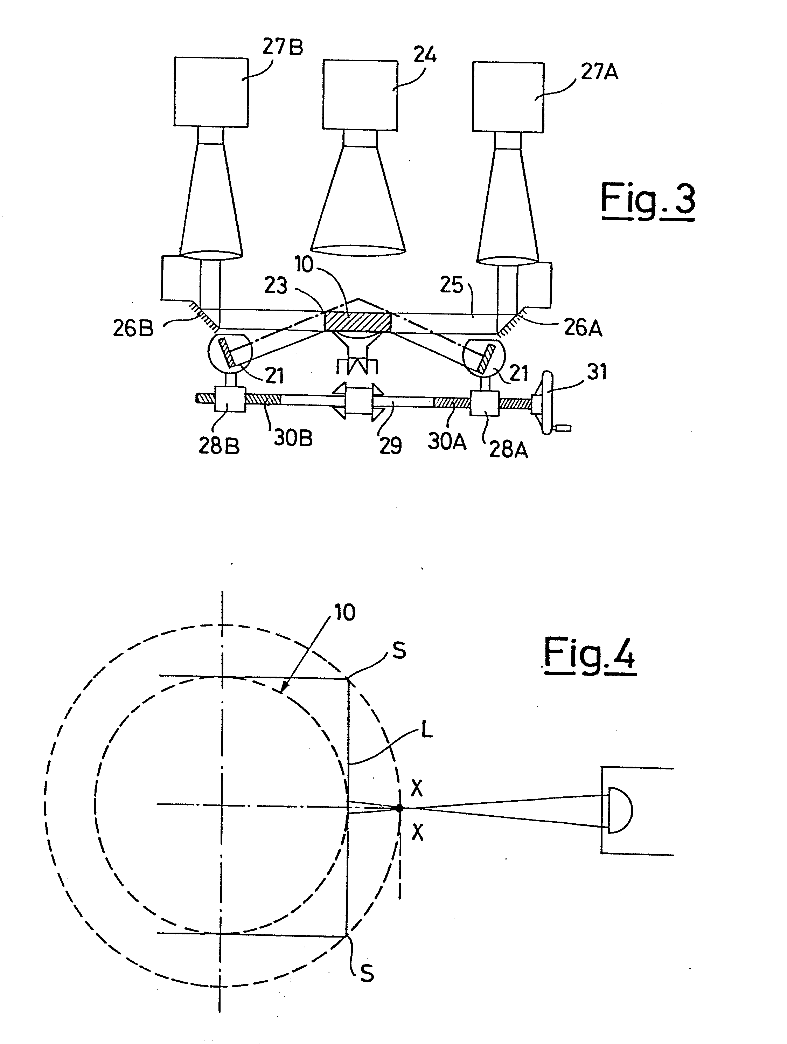

With reference to Figure 3 therefore, we can see that insert 10 is subjected to two diametrically opposite laser beams, which, as has been mentioned, lie within planes perpendicular to planes 11 and 12 which delimit insert 10.

The laser beam sources 21 are positioned in such a way that the blade beams issuing from parts 22 strike the edges, and in particular upper edge 23. The angle is such that if there is any irregularity or chipping on the edges, the beam is diffracted and detected by TV camera 24 which is also able to determinate the angle position of these irregularities through a system of polar coordinates connected to the profile of the upper surface of insert 10.

It is obvious that the inspection of the opposite surfaces is made by turning the insert round the other way.

The beam which strikes the sides of insert 10 also generates the reflected beam 25 which by means of mirror 26 is detected by a linear camera 27.

Figure 3 shows two symmetrical insert TV cameras 27A and 27B, two reflecting mirrors 26A and 26B.

It is evident that the image revealed by each TV camera 27 is translated to a height of insert 10. This height is detected point by point in the course of the insert's rotation in front of the laser beams and is compared to a theoretical value previously recorded in an electronic memory and comparator. The memory and comparator directly compares (through the use of a microprocessor) the detected values with the theoretical parameters, and consequently grades the insert according to the results of the comparison.

To this end, it is necessary to define an optic plane of reference, with respect to which the insert is positioned and measured.

As shown in Figure 3, once insert 10 is positioned on the support, it is rotated by the step by step motor at 360°. Only the angle bet-

0120211

ween 90° and 270° is used for the measurement function, while the first and last 90° of rotation are used for the acceleration and deceleration and rest of the support. The rotation between 90° and 270° is carried out at a constant angular velocity.

It is clear that by increasing the number of laser sources, for example 4 symmetrical locations, the angle of measurement is reduced to 90° and therefore the capacity of the apparatus is increased.

It is important to stress that the laser beam must be made on a vertical plane by rigorously parallel rays so that by changing the position of the side of the insert (since this is not usually circular in shape), the dimensions transmitted by mirror 26 to TV camera 27 represents the real dimension of the side of insert 10.

It also important that the position of source 21 of the laser beam must be adjustable with respect to the rotation axis of insert 10.

Figure 3 illustrates a solution where the two laser beam sources are mounted on sleeves 28A and 28B, which are internally threaded and fixed on a shaft 29 with two parts 30A and 30B oppositely threaded.

The rotation of a handwheel will provoke the equal and simultaneous approach or moving away of the sleeves and therefore of the laser beam sources with respect to the rotation axis of the insert 10 support.

Because of the slant of the converging laser beam along axis X-X (see also Figure 1), by moving the beam perpendicularly to its diffusion direction, the upper edge of insert 10 will be struck progressively by a beam concentrated in XX, showing up the defects located by the edge itself.

0120211

Since located defects (Figure 4) are more harmful on the edges S, than on the sides L, the focal point X must coincide with the external diameter, i.e. the semidiagonal of insert 10, during the relative motion between the laser beam source and the insert.

Seen from above, the point X, i.e. the meeting point between axes XX and the insert edges, provides the real coordinates of the profile of the upper surface plane, while the image diverted on lateral mirror 26 provides the real dimensions of the vertical plane.

It is obvious that with at least one output of laser beams 21 placed on a slant with respect to the position plane of insert 10 and TV camera 24, and at least one TV camera 27 it is possible:

a) to detect defects and irregularities of the cutting edge

b) to detect or survey the dimensions of the insert, both of the upper surface profile, and the parallelism of the two delimiting surfaces of the insert.

At this point the information detected by TV cameras 24 and 27, together with the detection of power frequency of the step by step motor, constitutes the real information for the computer system which may be programmed for the following:

a) search and location of chippings

b) dimension detection on 3 axes

c) checking programs for specifications with or without grading subprograms

d) recording on cassettes of statistical data of dimension control and chippings

e) display of images on the monitor

f) print-out of displayed images

Claims

1. Method for the dimensional checking of solid bodies, delimitated by two plane and parallel surfaces, of the kind in which the body is struck by a laser generated blade beam sliding along at least one edge of the body to be checked, being the beam,coming by reflection from said blade beam, sent onto an electro-optic detector group, characterized in that said blade beam, lying on the plane perpendicular to the edges of the body to be checked, is sent with a preestablished slant against the side of said body to strike it at its full height, being said beam moved along the whole perifery of the same body in order to check the whole perimetral side.

2. Method according to claim 1, characterized in that two opposite beams are used, each of which checks one half of the body to be inspected.

3. Method according to Claim 1, wherein two electro-optic groups are used, one to receive the reflected beam from the body, and the other receiving diffracted beams from any irregularities or chippings present on the upper edges of this body.

4. Method according to Claim 2, wherein said body is rotated at 360° around its axis perpendicular to the plane and parallel surfaces and

- 10 -

0120211

the rotation angle between 90° and 270° at a constant angular velocity is used for the checking.

5. Method according to Claim 1, wherein the laser beam source location is regulated with respect to the rotation axis of the body to be inspected.

6. Apparatus for the dimensional checking of solid bodies, delimitated by two plane and parallel surfaces, of the kind including a support for the body to be inspected, laser means generating a scanning beam, collimator means giving the beam a blade shape, and electro-optic means to receive and process the reflected beam resulting from the impact of the blade beam against the body, characterized in that said laser means is set out in a preestablished slant with respect to the side of the body to be checked, and motor means are provided to generate a relative motion between the body and the blade beam at a controlled speed.

7. Apparatus according to Claim 6, characterized in that two opposite laser beam sources are provided, each of which checks one half of the body.

8. Apparatus according to Claim 6, having motor means for the rotation at a controlled and detectable angular velocity of said body support.

9. Apparatus according to Claim 8, wherein said motor means comprise an electric step-by-step motor whose turning frequency is detected and signalled, in a per se known way, to a processor connected to said electro-optic means.

10. Apparatus according to Claim 6, wherein said electro-optic means are a first linear TV camera which receives the reflected beam from the side of said body, and a second TV camera for the reception of diffracted beams from the upper edge of said body.

11. Apparatus according to Claim 10, wherein the second linear TV camera is coaxially aligned with the rotation axis of the checked body.

12. Apparatus according to Claims 7 and 10, wherein one of the above mentioned linear TV cameras is provided for each laser beam source.

13. Apapratus according to Claim 6, wherein the adjustable laser beam source is adjustably mounted with respect to the rotation axis of the body.

14. Apparatus according to Claims 7 and 13, wherein the two laser beam sources are supported by internally threaded sleeves which are engaged by opposite symmetrical threadings of a shaft disposed according to a rotation axis and rotatable through actuating means.

**Fig.1**

**Fig.2**

Fig.3

Fig.4